# EUROPEAN PATENT SPECIFICATION

(11) **EP 3 474 397 B1**
(45) Date of publication and mention of the grant of the patent: **29.04.2020**
(21) Application number: 17815074.4
(22) Date of filing: 22.05.2017
(51) Int. Cl.: H02B 1/28, H02B 13/025, H01H 9/34, H05K 5/02, H01H 33/53

(54) **SWITCHGEAR**
SCHALTANLAGE
APPAREIL DE CONNEXION

(30) Priority: 21.06.2016 JP 2016122418
(43) Date of publication of application: 24.04.2019
(73) Proprietor: Mitsubishi Electric Corporation, Chiyoda-ku Tokyo 100-8310 (JP)
(72) Inventor: KIMURA Tohru, Tokyo 100-8310 (JP)
(74) Representative: Witte, Weller & Partner Patentanwälte mbB
(86) International application number: PCT/JP2017/018975
(87) International publication number: WO 2017/221605

(56) References cited:
- WO-A1-2008/136113
- JP-A- S5 111 146
- JP-A- 2010 183 818
- JP-U- S5 857 207
- US-A- 5 710 402

## Description

### TECHNICAL FIELD

The present invention relates to a switchgear having a casing, of which the inside is partitioned into a plurality of compartments.

### BACKGROUND ART

Conventionally, there has been a switchgear having a casing, of which the inside is partitioned into a plurality of compartments such as a breaker compartment, a bus compartment, and a cable compartment. Such a switchgear has an advantage of being capable of preventing an operator/maintenance inspector from approaching a high-voltage charge portion and preventing foreign matter from entering, but has a problem that, when an arc fault occurs to cause generation of high-temperature and high-pressure gas in a compartment provided with no pressure discharge opening, the high-temperature and high-pressure gas cannot be immediately discharged.

Thus, there has been an electric switchboard device in which an auxiliary board is provided on a side surface so that a route to a pressure discharge opening is secured, as in an electric switchboard device disclosed in Patent Document 1. In addition, there has been a switchgear in which an opening portion as means for discharging high-temperature and high-pressure gas therefrom is provided to each compartment to communicate with a ceiling portion of a casing, as in a switchgear disclosed in Patent Document 2.

### CITATION LIST

### PATENT DOCUMENT

Patent Document 1: Japanese Laid-Open Patent Publication No. 62-217811 (FIG. 1)
Patent Document 2: Japanese Laid-Open Patent Publication No. 2011-223721 (FIG. 1)

The document US5710402 A discloses an arc-resistant switchgear enclosure employing a toggle flap venting system, which permits two compartments to share a single exit path from the enclosure for any pressure and gases produced in either compartment.

Document WO 2008/136113 A1 discloses a metal closed type switch gear in which an electrical machine is housed inside a box having an inlet and an outlet. Inside the casing part of the box where the inlet is bored, an intra-board partition plate functioning as a ventilating partition plate having a vent hole opposed to the inlet is arranged apart from the casing part so that the intra-board partition plate may suppress discharging of a high-temperature ark gas from the inlet to the outside in occurrence of a short circuit in a cable chamber inside the box.

### SUMMARY OF THE INVENTION

### PROBLEMS TO BE SOLVED BY THE INVENTION

However, if an auxiliary board is provided as in Patent Document 1, a problem arises that the size of the entire device is increased and the configuration is complicated since the thickness is increased and the ground contact area is increased by the size of the auxiliary board. A plurality of switchgears are often arranged side by side, and in this case, influence of the increase in the ground contact area due to the auxiliary board further increases.

In addition, if pressure discharge means is provided to each compartment as in Patent Document 2, a problem arises that the configuration is complicated.

The present invention has been made to solve the above-described problems, and an object of the present invention is to obtain a switchgear in which pressure discharge performance at the time of an internal fault can be ensured with a simple configuration.

### SOLUTION TO THE PROBLEMS

The present invention provides a switchgear having a casing, of which an inside is partitioned into a plurality of divisions, the switchgear including: a first division provided with an opening portion which communicates with an outside of the casing; a second division adjacent to the first division; a front-side division disposed on a front side relative to the second division; a first air vent portion provided in the second division and communicating with the first division; and a second air vent portion provided in the second division and communicating with the front-side division, the second air vent portion having a higher passage resistance than the first air vent portion, and the passage resistance of the first division is lower than the passage resistance of the second division and the passage resistance of the front-side division. The dependent claims define embodiments.

### EFFECT OF THE INVENTION

In the switchgear according to the present invention, even if an internal fault occurs in the second division having no opening portion communicating with the outside of the casing, high-temperature and high-pressure gas generated owing to the internal fault can be caused to flow into the first division through the first air vent portion and can be discharged from the opening portion. Accordingly, the pressure discharge performance at the time of an internal fault can be ensured with a simple configuration.

### BRIEF DESCRIPTION OF THE DRAWINGS

[FIG. 1] FIG. 1 is a side sectional view of a switchgear according to embodiment 1 of the present invention.
[FIG. 2] FIG. 2 is a side sectional view of a breaker compartment of the switchgear according to embodiment 1 of the present invention.
[FIG. 3] FIG. 3 is a view as seen from arrows P-P in FIG. 2.
[FIG. 4] FIG. 4 is a view as seen from arrows Q-Q in FIG. 2.
[FIG. 5] FIG. 5 is a view that shows movement of an arc and flow of high-temperature and high-pressure gas when an internal fault occurs in the switchgear according to embodiment 1 of the present invention.
[FIG. 6] FIG. 6 is a view that shows movement of an arc and flow of high-temperature and high-pressure gas when an internal fault occurs in another example of the switchgear according to embodiment 1 of the present invention.
[FIG. 7] FIG. 7 is a side sectional view of a breaker compartment of a switchgear according to embodiment 2 of the present invention.
[FIG. 8] FIG. 8 is a view as seen from arrows R-R in FIG. 7.

### DESCRIPTION OF EMBODIMENTS

### Embodiment 1

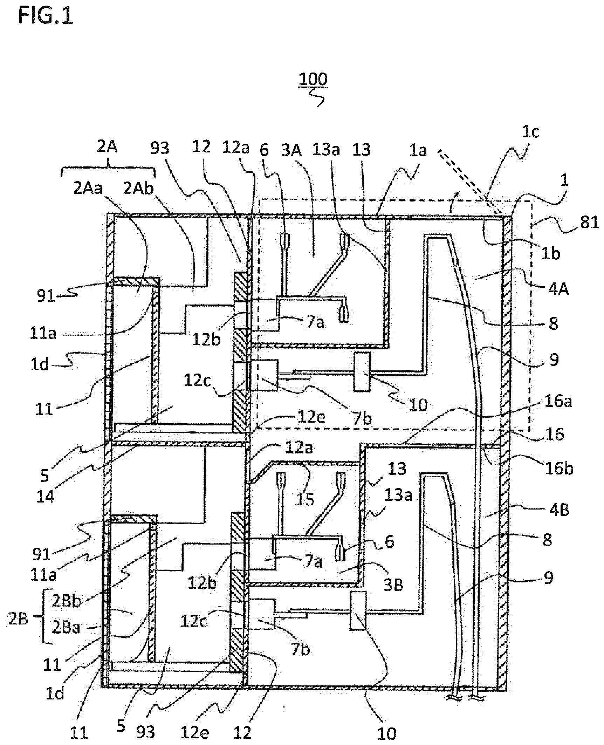

Hereinafter, embodiment 1 of the present invention will be described with reference to FIG. 1 to FIG. 6. FIG. 1 is a side sectional view of a switchgear according to embodiment 1 of the present invention, with the left side being a front side and with the right side being a rear side. A switchgear 100 is one of a plurality of switchgears arranged in a direction perpendicular to the drawing plane. In the switchgear 100: a pressure discharge opening portion 1b is formed in a ceiling portion 1a; the inside of a casing 1 composed of two stages, i.e., upper and lower stages is partitioned into a plurality of compartments by partition plates 12 to 16 serving as the respective boundaries; and a breaker compartment 2A housing a breaker 5 such as a vacuum circuit breaker, a gas circuit breaker, or an air circuit breaker, a bus compartment 3A disposed on the upper rear side relative to the breaker compartment 2A, and a cable compartment 4A disposed on the lower rear side relative to the breaker compartment 2A and having the pressure discharge opening portion 1b on the upper side, are disposed on the upper stage in order from the front side. The inside of the breaker compartment 2A is partitioned into a front-side division 2Aa and a rear-side division 2Ab by a partition plate 11. The breaker compartment 2A is separated from the bus compartment 3A and the cable compartment 4A by the partition plate 12 provided with air vent portions 12a to 12e. The bus compartment 3A and the cable compartment 4A are separated from each other by the partition plate 13 provided with an air vent portion 13a which allows the bus compartment 3A and the cable compartment 4A to communicate with each other.

Here, the bus compartment 3A and the cable compartment 4A are collectively regarded as one division and named a pressure discharge division 81. Among all the compartments, the cable compartment 4A has the largest space where a fluid can freely flow, and has the lowest passage resistance.

As on the upper stage, also on the lower stage of the casing 1, a breaker compartment 2B, a bus compartment 3B, and a cable compartment 4B are disposed from the front side, and the inside of the breaker compartment 2B is partitioned into a front-side division 2Ba and a rear-side division 2Bb by a partition plate 11. The breaker compartment 2B is separated from the cable compartment 4A, the bus compartment 3B, and the cable compartment 4B by the partition plate 12 provided with air vent portions 12a to 12e. The bus compartment 3B and the cable compartment 4B are separated from each other by a partition plate 13 provided with an air vent portion 13a.

Regarding the boundary between the upper stage and the lower stage, the breaker compartment 2A and the breaker compartment 2B are separated from each other by the partition plate 14. The bus compartment 3B and the cable compartment 4A are separated from each other by the partition plate 15. The cable compartment 4A and the cable compartment 4B are separated from each other by the partition plate 16 provided with a cable hole 16b and an air vent portion 16a which allows the cable compartment 4A and the cable compartment 4B to communicate with each other.

To the ceiling portion 1a of the casing 1, a pressure discharge plate 1c for opening and closing the pressure discharge opening portion 1b is mounted so as to be swingable. To the front surface of the casing 1, front surface doors 1d which open and close on, for example, hinges are mounted on the upper stage and the lower stage, respectively. The pressure discharge opening portion 1b is closed in a normal state so as not to allow dust or a falling object from above to enter the casing 1.

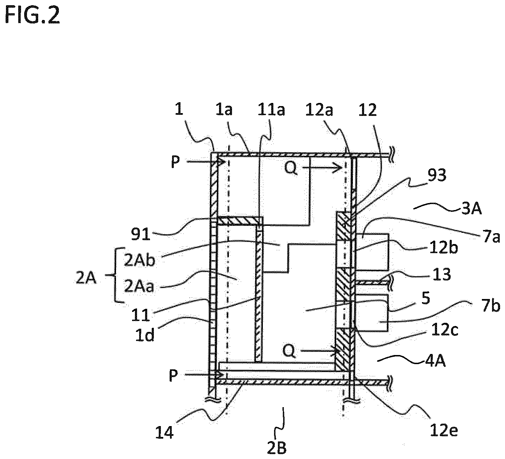

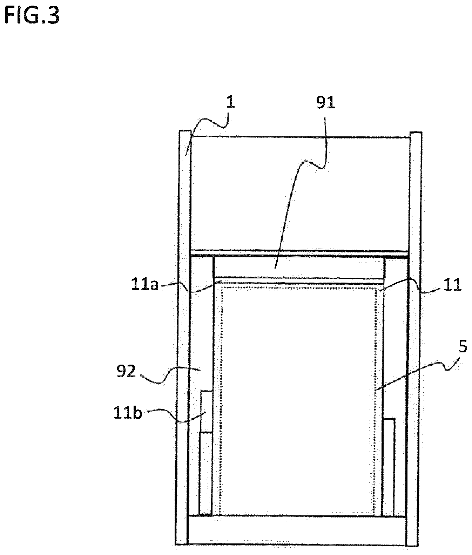

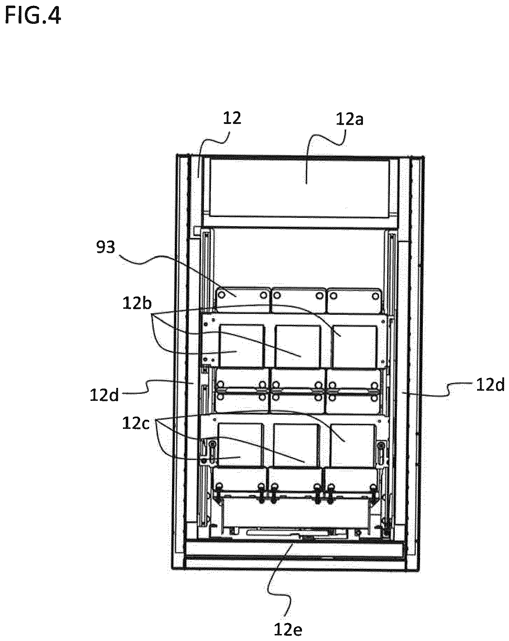

Next, the details of each compartment will be described. FIG. 2 is a side sectional view of the breaker compartment 2A, FIG. 3 is a view as seen from arrows P-P in FIG. 2, and FIG. 4 is a view as seen from arrows Q-Q in FIG. 2.

The breaker compartment 2A houses the breaker 5 in the rear-side division 2Ab. The breaker 5 can be drawn out to the front-side division 2Aa through detachment of the partition plate 11. On the rear side of the breaker 5, two main-circuit devices (not shown) respectively connected to disconnecting portions 7a and 7b are disposed so as to be apart from each other at a predetermined interval in the up/down direction. A fixation frame 93 is disposed between the breaker 5 and the partition plate 12. By respectively connecting terminals (not shown) on one end side and another end side of the breaker 5 to the fixation frame 93, an electric route for transferring power from a bus 6 of the bus compartment 3A to a load-side conductor 8 of the cable compartment 4A is formed.

The periphery of the partition plate 11 is enclosed by a horizontal frame 91 and vertical frames 92, and thus the only air vent portions that allow the front-side division 2Aa and the rear-side division 2Ab to communicate with each other are air vent portions 11a and 11b as shown in FIG. 3. The air vent portion 11a is formed between the horizontal frame 91 and the partition plate 11, and has a shape of a thin and long rectangle extending leftward and rightward. The air vent portion 11b is formed at a center portion in the up/down direction of one or both of the vertical frames 92, and has a rectangular shape.

The air vent portion 12a provided on the upper side of the partition plate 12 has a rectangular shape as shown in FIG. 4, and communicates with the bus compartment 3A. The air vent portions 12b and the air vent portions 12c provided at center portions of the partition plate 12 so as to be apart from each other at a predetermined interval in the up/down direction, have square shapes and communicate with the bus compartment 3A and the cable compartment 4A, respectively. The air vent portions 12d respectively provided at both left and right end portions of the partition plate 12 each have a shape of a rectangle extending so as to be thin and long in the up/down direction, and communicate with the bus compartment 3A and the cable compartment 4A. The air vent portion 12e provided on the lower side of the partition plate 12 has a shape of a rectangle extending so as to be thin and long in the left/right direction, and communicates with the cable compartment 4A. The shape of each air vent portion is merely an example, and is not limited thereto but may be a shape of a circle or an ellipse, or a polygon other than a quadrangle. In addition, the number of the air vent portions is not particularly limited either. Furthermore, a configuration may be employed in which two or more partition plates different from one another in terms of the shapes or the number of the air vent portions are superposed.

In the present embodiment, the sum of the sectional areas of the air vent portions 12a to 12e is larger than the sum of the sectional areas of the air vent portions 11a and 11b. Accordingly, in the rear-side division 2Ab, the passage resistances of the air vent portions 12a to 12e communicating with the bus compartment 3A and the cable compartment 4A are lower than the passage resistances of the air vent portions 11a and 11b communicating with the front-side division 2Aa.

Therefore, gas in the rear-side division 2Ab is unlikely to flow into the front-side division 2Aa and is likely to flow into the bus compartment 3A and the cable compartment 4A. Although only the breaker compartment 2A on the upper stage has been described above, the same applies to the breaker compartment 2B on the lower stage.

The bus compartment 3A houses: the three-phase bus 6 for transferring power from the higher-level side of a system; and a branch conductor connecting the bus 6 to the terminal (not shown) on the one end side of the breaker 5 via the disconnecting portion 7a. The cable compartment 4A houses: the load-side conductor 8 connected to the terminal (not shown) on the other end side of the breaker 5 via the disconnecting portion 7b; and a cable 9 and a measurement device 10 connected to the load-side conductor 8.

In the bus compartment 3A, the sectional area of the air vent portion 13a is larger than the sum of the sectional areas of the air vent portions 12a and 12b, and the passage resistance of the air vent portion 13a is lower than the passage resistances of the air vent portions 12a and 12b. Accordingly, gas in the bus compartment 3A is unlikely to flow into the breaker compartment 2A and is likely to flow into the cable compartment 4A.

The same applies to the bus compartment 3B, i.e., gas in the bus compartment 3B is unlikely to flow into the breaker compartment 2B and is likely to flow into the cable compartment 4B.

In the cable compartment 4B, the sectional area of the air vent portion 16a communicating with the cable compartment 4A is larger than the sum of the sectional areas of the air vent portions 12c, 12e, and 13a, and the passage resistance of the air vent portion 16a is lower than the passage resistances of the air vent portions 12c, 12e, and 13a. Accordingly, gas in the cable compartment 4B is unlikely to flow into the breaker compartment 2B and the bus compartment 3B and is likely to flow into the cable compartment 4A.

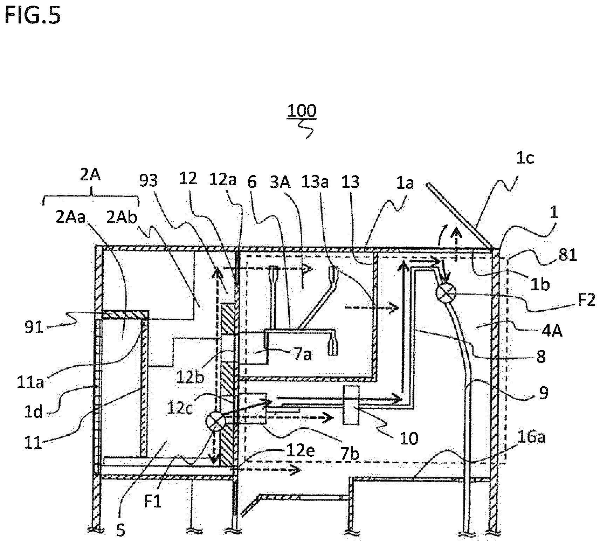

Next, operations will be described. FIG. 5 is a view that shows movement of an arc and flow of high-temperature and high-pressure gas when an internal fault occurs in the rear-side division 2Ab of the breaker compartment 2A. In FIG. 5, each solid-line arrow indicates the route of movement of an arc, and each broken-line arrow indicates the route of flow of high-temperature and high-pressure gas. When an arc occurs at an arc occurrence point F1 as a result of occurrence of an internal fault due to short-circuiting or the like, a conductor and an electric conductor such as a metal plate are vaporized by the heat of the arc in the rear-side division 2Ab, so that high-temperature and high-pressure gas is generated. The high-temperature and high-pressure gas passes between devices in the rear-side division 2Ab so as to diffuse to a surrounding area. However, as described above, gas in the rear-side division 2Ab is unlikely to flow into the front-side division 2Aa and is likely to flow into the bus compartment 3A and cable compartment 4A, and thus, from immediately after being generated, the high-temperature and high-pressure gas is led to the rear side and flows into the bus compartment 3A and the cable compartment 4A through the air vent portions 12a to 12e. Furthermore, gas in the bus compartment 3A is unlikely to flow into the breaker compartment 2A and is likely to flow into the cable compartment 4A, and thus the high-temperature and high-pressure gas having flowed into the bus compartment 3A flows into the cable compartment 4A through the air vent portion 13a. When the internal pressure of the cable compartment 4A increases as a result of the high-temperature and high-pressure gas flowing thereinto, the pressure discharge opening portion 1b is opened by the pressure discharge plate 1c being lifted upward, and the high-temperature and high-pressure gas is discharged from the pressure discharge opening portion 1b.

The arc at the arc occurrence point F1 is driven to the measurement device 10 side by electromagnetic force acting on a short-circuited portion (not shown). Ordinarily, an arc is unlikely to move over compartments. However, in the present embodiment, the high-temperature and high-pressure gas flows into the cable compartment 4A, and thus also the arc is moved into the cable compartment 4A via the high-temperature and high-pressure gas. The arc moved into the cable compartment 4A passes along the load-side conductor 8, to move to a point of connection with the cable 9. The point of connection between the load-side conductor 8 and the cable 9 is an arc re-occurrence point F2.

Although the case where an internal fault occurs in the breaker compartment 2A has been described above, the same applies to a case where an internal fault occurs in the other compartments. For example, when an internal fault occurs in the breaker compartment 2B on the lower stage, high-temperature and high-pressure gas is led to the rear side, and a part of the high-temperature and high-pressure gas directly flows into the cable compartment 4A through the air vent portion 12a, and is discharged from the pressure discharge opening portion 1b. The rest of the high-temperature and high-pressure gas flows into the cable compartment 4B, and thereafter flows into the cable compartment 4A through the air vent portion 16a, and is discharged from the pressure discharge opening portion 1b. The arc is moved to the cable compartment 4B via the high-temperature and high-pressure gas flowing into the cable compartment 4B.

Also when an internal fault occurs in the bus compartment 3A, 3B, high-temperature and high-pressure gas is led to the rear side and flows into the cable compartment 4A, 4B. Also the arc is moved to the cable compartment 4A, 4B via the high-temperature and high-pressure gas.

According to embodiment 1, in the rear-side division, i.e., a second division, of the breaker compartment adjacent to the pressure discharge division, i.e., a first division, obtained by combining the bus compartment and the cable compartment provided with the pressure discharge opening portion, the passage resistance of the air vent portion communicating with the pressure discharge division, i.e., a first air vent portion is set to be lower than the passage resistance of the air vent portion communicating with the front-side division, i.e., a second air vent portion. Thus, by high-temperature and high-pressure gas being led to the rear side when an internal fault occurs in the rear-side division, the high-temperature and high-pressure gas can be caused to flow into the cable compartment and the bus compartment, and the high-temperature and high-pressure gas can be discharged from the pressure discharge opening portion. Accordingly, there is no need to provide the pressure discharge opening portion in each compartment, and the pressure discharge performance at the time of an internal fault can be ensured with a simple configuration.

In addition, since the present invention can be implemented by only adjusting the passage resistances of the air vent portions provided in the partition plates in the casing, no auxiliary board as pressure discharge means needs to be provided externally, whereby the size of the entire device can be prevented from increasing.

Furthermore, since, from immediately after being generated, high-temperature and high-pressure gas is led to the rear side in the breaker compartment, increase in the pressure on the front side can be suppressed by preventing the high-temperature and high-pressure gas from flowing into the front-side division. Accordingly, the structure of each front surface door can be simplified.

Moreover, since the passage resistance is set to be the lowest in the cable compartment provided with the pressure discharge opening portion, high-temperature and high-pressure gas can be more reliably caused to flow into the cable compartment, and discharged to the outside.

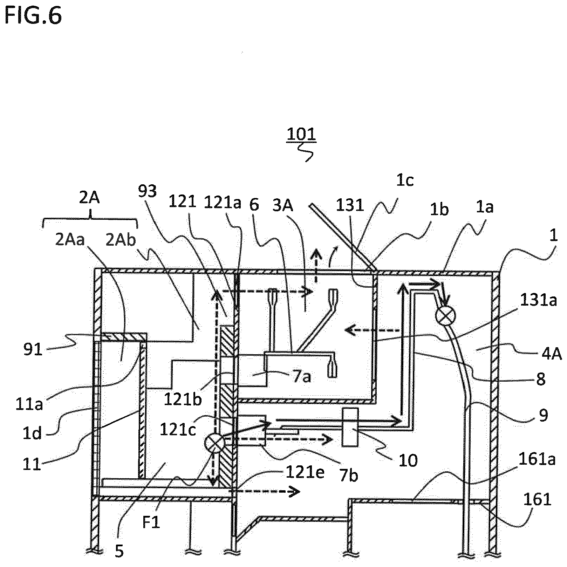

The pressure discharge opening portion may be provided in a compartment other than the cable compartment. In a switchgear 101 shown in FIG. 6, the bus compartment 3A has the pressure discharge opening portion 1b on the upper side. In this case, among air vent portions provided in a partition plate 121, the sectional areas of air vent portions 121a and 121b communicating with the bus compartment 3A are set to be larger than the sectional areas of air vent portions 121c and 121e communicating with the cable compartment 4A so that gas in the rear-side division 2Ab is likely to flow into the bus compartment 3A. In addition, the sectional area of an air vent portion 131a provided in a partition plate 131 is set to be larger than the sectional area of an air vent portion 161a provided in a partition plate 161 so that gas in the cable compartment 4A is likely to flow into the bus compartment 3A. In addition, gas in the cable compartment 4A is further likely to flow into the bus compartment 3A if the passage resistance of the bus compartment 3A is reduced by increasing the volume of a space where a fluid can freely flow in the bus compartment 3A, by means such as increase of the volume of the bus compartment 3A or replacement, with a small-sized device, of a device disposed in the bus compartment 3A, although such a situation is not shown.

A configuration such as that of the switchgear 101 is useful in a case where an arc needs to be moved to the bus compartment 3A, as in a case where, contrary to the switchgear 100 according to embodiment 1, power from the higher-level side of a system is received in the cable compartment 4A and the power is transferred from the bus compartment 3A to the lower-level side of the system.

The switchgear according to the present invention is not limited to one having the arrangement configuration shown in FIG. 1, but may be one including a disconnector and a grounding switch, for example. Ordinarily, a switchgear is composed of the above-described compartments and a control device compartment, but the cable compartment may be excluded. As described above, the pressure discharge opening portion may be provided in any of the compartments, and thus the present invention can be implemented even if the cable compartment is excluded.

### Embodiment 2

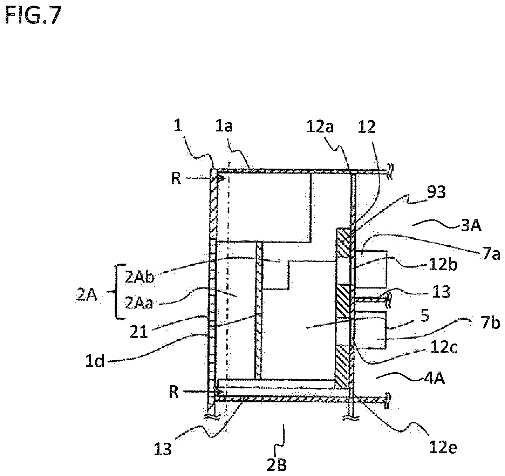

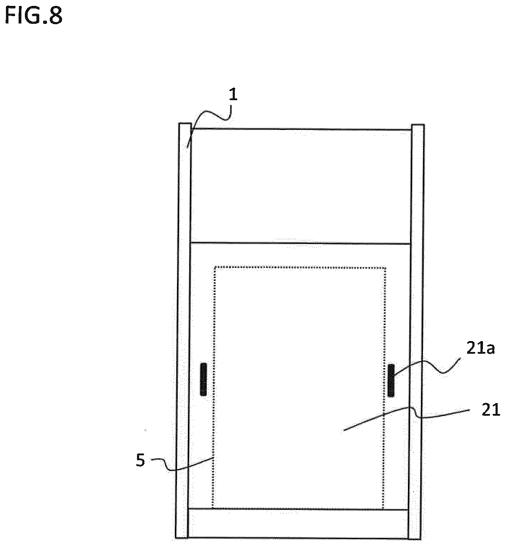

Hereinafter, embodiment 2 of the present invention will be described with reference to FIG. 7 and FIG. 8. Components that are the same as or correspond to those in FIG. 1 to FIG. 6 are denoted by the same reference characters, and the description thereof is omitted. FIG. 7 is a side sectional view of a breaker compartment of a switchgear according to embodiment 2 of the present invention, and FIG. 8 is a view as seen from arrows R-R in FIG. 7. As shown therein, in the present embodiment, an internal cover 21 having sealing property and having handles 21a on both left and right sides is disposed between the front-side division 2Aa and the rear-side division 2Ab so as to close the air vent portions 11a and 11b of embodiment 1. Accordingly, a configuration in which gas in the rear-side division 2Ab flows into only the bus compartment 3A is attained, and thus, when an internal fault occurs in the rear-side division 2Ab, high-temperature and high-pressure gas can be more reliably led to the rear side. Also the breaker compartment 2B may be similarly provided with the internal cover 21, or the breaker compartment 2B may be the same as that in embodiment 1. The other configurations are the same as those in embodiment 1, and thus the description thereof is omitted.

According to embodiment 2, the same effect as in embodiment 1 can be obtained.

In addition, by disposing the internal cover having sealing property between the front-side division and the rear-side division, high-temperature and high-pressure gas can be more reliably prevented from flowing into the front-side division when an internal fault occurs.

It is noted that, within the scope of the present invention, the above embodiments may be freely combined with each other, or each of the above embodiments may be modified or simplified as appropriate.

### DESCRIPTION OF THE REFERENCE CHARACTERS

- 1: casing
- 1a: ceiling portion
- 1b: pressure discharge opening portion
- 2A, 2B: breaker compartment
- 2Aa, 2Ba: front-side division
- 2Ab, 2Bb: rear-side division
- 3A, 3B: bus compartment
- 4A, 4B: cable compartment
- 5: breaker
- 11 to 16, 121: partition plate
- 11a, 11b, 12a to 12e, 13a, 16a: air vent portion
- 21: internal cover
- 81: pressure discharge division
- 91: horizontal frame
- 92: vertical frame
- 93: fixation frame
- 100, 101: switchgear

## Claims

1. A switchgear (100, 101) having a casing (1), of which an inside is partitioned into a plurality of divisions, the switchgear (100, 101) comprising:
a first division (81) provided with an opening portion (1b) which communicates with an outside of the casing (1);
a second division (2Ab) adjacent to the first division (81);
a front-side division (2Aa) disposed on a front side relative to the second division (2Ab); and
a first air vent portion provided (12a-12e) in the second division (2Ab) and communicating with the first division (81);
the switchgear being **characterized in that** it further comprises
a second air vent portion (11a, 11b) provided in the second division (2Ab) and communicating with the front-side division (2Aa), the second air vent portion (11a, 11b) having a higher passage resistance than the first air vent portion (12a-12e),
and **in that** the passage resistance of the first division (81) is lower than the passage resistance of the second division (2Ab) and the passage resistance of the front-side division (2Aa).

2. The switchgear (100, 101) according to claim 1, wherein the first air vent portion (12a-12e) has a larger sectional area than the second air vent portion (11a, 11b).

3. The switchgear (100, 101) according to claim 1 or 2, the switchgear further comprising an internal cover (21) for closing the second air vent portion (11a, 11b).

## Patentansprüche

1. Schaltanlage (100, 101) mit einem Gehäuse (1), von dem eine Innenseite in eine Mehrzahl von Abteilungen aufgeteilt ist, wobei die Schaltanlage (100, 101) Folgendes aufweist:
eine erste Abteilung (81), die mit einem Öffnungsabschnitt (1b) bereitgestellt ist, der mit einer Außenseite des Gehäuses (1) in Verbindung steht;
einer zweiten Abteilung (2Ab) benachbart zu der ersten Abteilung (81);
einer Vorderseitenabteilung (2Aa), die auf einer Vorderseite relativ zu der zweiten Abteilung (2Ab) angeordnet ist; und
einem ersten Lüftungsabschnitt (12a-12e), der in der zweiten Abteilung (2Ab) bereitgestellt ist und mit der ersten Abteilung (81) in Verbindung steht; wobei die Schaltanlage **dadurch gekennzeichnet ist,**
**dass** sie des Weiteren einen zweiten Lüftungsabschnitt (11a, 11b) aufweist, der in der zweiten Abteilung (2Ab) bereitgestellt ist und mit dem Vorderseitenabteilung (2Aa) in Verbindung steht, wobei der zweite Lüftungsabschnitt (11a, 11b) einen höheren Durchlasswiderstand als der erste Lüftungsabschnitt (12a-12e) aufweist, und
**dass** der Durchlasswiderstand der ersten Abteilung (81) niedriger ist als der Durchlasswiderstand der zweiten Abteilung (2Ab) und der Durchlasswiderstand der Vorderseitenabteilung (2Aa).

2. Schaltanlage (100, 101) nach Anspruch 1, wobei der erste Lüftungsabschnitt (12a-12e) einen größeren Querschnittsbereich als der zweite Lüftungsabschnitt (11a, 11b) aufweist.

3. Schaltanlage (100, 101) nach Anspruch 1 oder 2, wobei die Schaltanlage des Weiteren eine Innenabdeckung (21) zum Schließen des zweiten Lüftungsabschnitts (11a, 11b) aufweist.

## Revendications

1. Appareil de connexion (100, 101) ayant un boîtier (1), dont l'intérieur est divisé en une pluralité de sections, l'appareil de connexion (100, 101) comprenant :
une première section (81) munie d'une partie d'ouverture (1b) qui communique avec l'extérieur du boîtier (1) ;
une deuxième section (2Ab) adjacente à la première section (81) ;
une section frontale (2Aa) disposée sur un côté frontal par rapport à la deuxième section (2Ab) ; et
une première partie de ventilation prévue (12a-12e) dans la deuxième section (2Ab) et communiquant avec la première section (81) ;
l'appareil de connexion étant **caractérisé en ce qu'**il comprend en outre :
une deuxième partie de ventilation (11a, 11b) prévue dans la deuxième section (2Ab) et communiquant avec la section frontale (2Aa), la deuxième partie de ventilation (11a, 11b) ayant une résistance au passage plus élevée que la première partie de ventilation (12a-12e),
et **en ce que**
la résistance au passage de la première section (81) est inférieure à la résistance au passage de la deuxième section (2Ab) et à la résistance au passage de la section frontale (2Aa).

2. Appareil de connexion (100, 101) selon la revendication 1, la première partie de ventilation (12a-12e) ayant une section plus grande que la seconde partie de ventilation (11a, 11b).

3. Appareil de connexion (100, 101) selon la revendication 1 ou 2, l'appareil de connexion comprenant en outre un couvercle interne (21) pour fermer la deuxième partie de ventilation (11a, 11b).
